(19) Europäisches Patentamt
European Patent Office
Office européen des brevets

(11) **EP 1 819 143 A1**

(12) **EUROPEAN PATENT APPLICATION**
published in accordance with Art. 158(3) EPC

(43) Date of publication:
**15.08.2007 Bulletin 2007/33**

(51) Int Cl.:
*H04N 1/46* *(2006.01)* *G06T 1/00* *(2006.01)*
*H04N 1/60* *(2006.01)*

(21) Application number: **05809555.5**

(22) Date of filing: **28.11.2005**

(86) International application number:
**PCT/JP2005/021808**

(87) International publication number:
**WO 2006/059573 (08.06.2006 Gazette 2006/23)**

(84) Designated Contracting States:
**DE FR GB**

(30) Priority: **02.12.2004 JP 2004349856**

(71) Applicant: **MATSUSHITA ELECTRIC INDUSTRIAL CO., LTD.**
**Osaka 571-8501 (JP)**

(72) Inventors:
• **HIRASHIMA, Tsuyoshi**
**c/o Matsushita El. Ind. Co., Ltd.**
**Chuo-ku, Osaka-shi, Osaka 540-6319 (JP)**
• **OJIMA, Shuichi**
**c/o Matsushita El. Ind. Co., Ltd.**
**Chuo-ku, Osaka-shi, Osaka 540-6319 (JP)**

• **IKEDA, Jun**
**c/o Matsushita El. Ind. Co., Ltd.**
**Chuo-ku, Osaka-shi, Osaka 540-6319 (JP)**
• **HATA, Ryouta**
**c/o Matsushita El. Ind. Co., Ltd.**
**Chuo-ku, Osaka-shi, Osaka 540-6319 (JP)**
• **KIUCHI, Shinya**
**c/o Matsushita El. Ind. Co., Ltd.**
**Chuo-ku, Osaka-shi, Osaka 540-6319 (JP)**

(74) Representative: **Pautex Schneider, Nicole Véronique et al**
**Novagraaf International SA**
**25, Avenue du Pailly**
**1220 Les Avanchets - Geneva (CH)**

(54) **COLOR ADJUSTING DEVICE AND METHOD**

(57) A color adjustment device (100) comprises an image characteristic amount acquiring unit (10), a specific-color-area determination unit (20), and a color compensation unit (30). The image characteristic amount acquiring unit (10) acquires the image characteristic amount of an input image from the average luminance or additional information of the input image. The specific-color-area determination unit (20) determines a specific color area based on the image characteristic amount.

With reference to the specific color area, the color compensation unit (30) calculates the degree of similarity of the input color of the input image to the specific color, and performs the color adjustment of the input color of the input image with respect to at least one specific color. The area of the input image which is comparatively wide and possesses a color of the same system as the specific color is not wrongly recognized as the area of the specific color.

Fig. 1

**Description**

Technical Field

This invention relates to a color adjustment device and a method thereof which can adjust the color of color display devices, such as a television apparatus, a portable terminal, a computer display screen, and a color printer; more specifically relating to technology of adjusting the color of inputted image with respect to a specific color.

Background Art

In the conventional color adjustment device (the device mounted in a television apparatus, for example), an overall color adjustment is performed to match a desired color, by adjusting the phase and level of the chroma or the level of brightness of an analog picture signal.

It is well known that colors which human has memorized such as a skin color and a blue sky color, are called a "memory color", and different from the colors of the real objects. In the so-called "desirable color reproduction" which displays such a memory color, it is necessary to adjust, for example, the skin color and the blue sky color to the desired colors independently.

In the present specification, a "specific color" is defined as a color for which color adjustment is carried out individually, like the memory color.

With respect to color adjustment, Document 1 (Japanese Unexamined Patent Publication Number Hei 06-78320) discloses a technology in which a weighting coefficient is determined according to a difference with a reference chromaticity in the chromaticity plane which possesses a hue component and a chrominance component, and the color adjustment is performed, corresponding to the weighting coefficient.

Document 2 (Japanese Unexamined Patent Publication Number Hei 10-198795) discloses a technology of performing color adjustment, in which obtaining the degree of characteristic hc which indicates a degree of approximation to a specified hue, and assuming that the adjustment factors for an input (R, G, B) are (a1, a2, a3), the adjusted output (R', G', B') is given by

$$(R', G', B') = (R, G, B) + hc \times (a1, a2, a3),$$

where, the symbol "$\times$" is a multiplication operator. When performing color adjustment using the technologies disclosed by Document 1 and Document 2, the specific color is set up as a fixed value in advance. However, specific colors in an input image, such as a skin color and a blue sky color, may possess different distribution on color space, depending on conditions of lighting or a photography scene (conditions such as bright lighting or dark lighting, a daytime scene or a night scene, etc.). Therefore, in the setup of the fixed specific color, it is difficult to adjust all colors to desired ones, as for the input images for which the conditions of lighting or a photography scene differ.

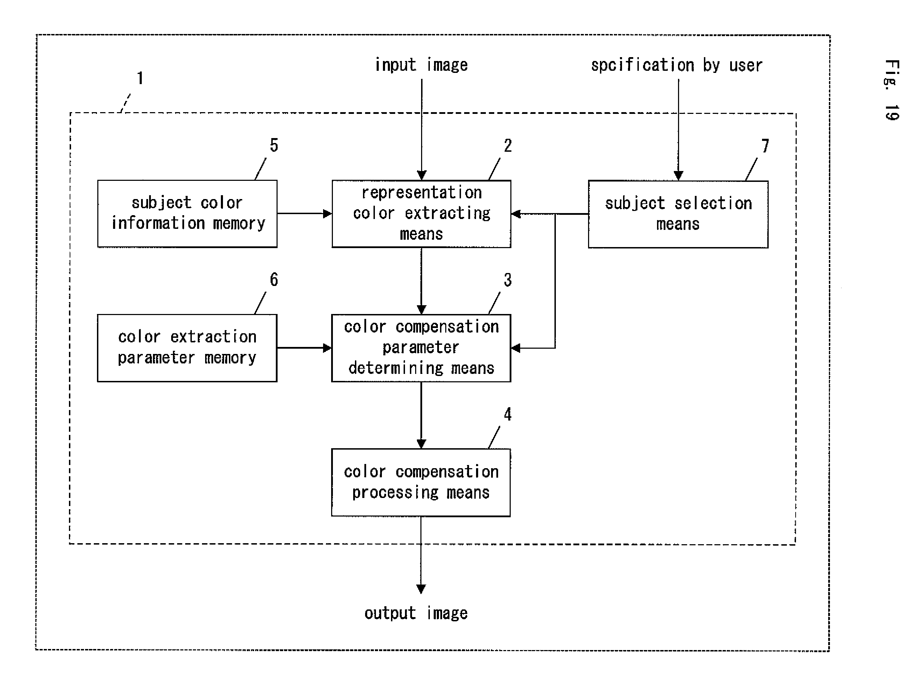

Furthermore, Document 3 (Japanese Unexamined Patent Publication Number 2001-92956) discloses a color compensation device 1 shown in Fig. 19. The conventional color compensation device 1 shown in Fig. 19 comprises a representation color extracting means 2, a color compensation parameter determining means 3, a color compensation processing means 4, a subject color information memory 5, a color extraction parameter memory 6, and a subject selection means 7. The subject color information memory 5 stores divided color areas and their distribution frequencies, obtained by dividing the color distributable range of a specific subject. The color extraction parameter memory 6 stores color compensation parameters given for every divided color areas. The representation color extracting means 2 extracts the representation color of an input image with reference to the divided color areas stored in the subject color information memory 5, the color compensation parameter determining means 3 determines the color compensation parameter to the input image with reference to the color compensation parameters stored in the color extraction parameter memory 6, and the color compensation processing means 4 performs the color compensation processing.

In the color compensation device 1 shown in Fig. 19, when compensating the skin color as a specific color, distribution of the pixels which exist in the specific color candidate range assigned in advance is mapped onto the color space, and a color with the highest frequency is regarded as the specific color, thereby, reducing the influence of the lighting condition etc. However, since colors in the skin color system exist in a nature numerously, the color of a comparatively large area and resembling the skin color is apt to be accidentally recognized as the specific color. This fact causes a problem.

Therefore, the present invention aims at providing a color adjustment device and method of adjusting the photographed input image to the desired color, even if the conditions of lighting or a photography scene change.

Disclosure of the Invention

A first aspect of the present invention provides a color adjustment device comprising: an image-characteristic-amount acquiring unit operable to acquire a value expressing characteristic of an inputted color image, as image characteristic amount; a specific-color-area determination unit operable to determine, as a specific color area, an arbitrary area in a color space including a specific color defined in correspondence with the color image, the determination being made based on the image characteristic amount; and a color compensation unit operable to compensate an input color which exists in the specific color area, among the input color of the color image.

According to the above structure, specific color areas for a skin color, a blue sky color, and a green color, etc. are determined based on the image characteristic amount which affects the color distribution of the input image; therefore, even if an object with a comparatively large area of a color near the specific color is present in an image, it is possible to avoid wrongly recognizing the color of the object as the specific color. Consequently, the color adjustment with a high-quality image can be performed to any color images.

A second aspect of the present invention provides the color adjustment device as defined in the first aspect, wherein the image-characteristic-amount acquiring unit comprises: a first storage unit operable to store a color-space distributable range indicative of a range of color space in which a color component to be treated in acquiring the image characteristic amount can be distributed; a selection unit operable to judge whether or not the input color is included in the color-space distributable range stored in the first storage unit, and operable to select and output the input color when the input color is included in the color-space distributable range; and a characteristic-amount calculation unit operable to calculate the image characteristic amount, using the input color outputted by the selection unit.

According to the above structure, the input color of the input image is compared with the distributable range in the color space of the color component used as the calculation object of the image characteristic amount defined in advance, and from the comparison result, the characteristic amount of the input image can be obtained. Therefore, even if there is no additional information, such as a photography condition of the input image, a suitable color adjustment can be performed.

A third aspect of the present invention provides the color adjustment device as defined in the first aspect, wherein the image-characteristic-amount acquiring unit comprises: a second storage unit operable to store an image distributable range indicative of an area of a screen in which a pixel to be treated in acquiring the image characteristic amount can be distributed; a selection unit operable to judge whether or not a pixel for adjustment on the screen is included in the image distributable range stored in the second storage unit, and operable to select and output the input color of the pixel for adjustment when the pixel for adjustment is included in the image distributable range; and a characteristic-amount calculation unit operable to calculate the image characteristic amount, using the input color outputted by the selection unit.

According to the above structure, the image characteristic amount can be calculated from the input color of the input image in the specific area on the screen. Accordingly, for an image in which a face is displayed in the center of the screen, as in a videophone for example, it is possible to perform a simple and suitable color adjustment, by assigning the specific area in the vicinity of the center of the screen.

A fourth aspect of the present invention provides the color adjustment device as defined in the first aspect, wherein the specific-color-area determination unit comprises: a specific-color-reference-area storage unit operable to store a specific color reference area indicative of an area in color space of a subject image for adjustment as reference; and a specific-color-area conversion unit operable to convert the specific color reference area stored in the specific-color-reference-area storage unit, into the specific color area, based on the image characteristic amount.

A fifth aspect of the present invention provides the color adjustment device as defined in the first aspect, wherein the specific-color-area determination unit determines, based on the image characteristic amount, the specific color area in a spread of color space with a center on the specific color, in terms of weighting coefficients which are used to express an apparent specific color.

According to the above structures, the color adjustment of the input color of the input image can be carried out only for a specific color without wrong recognition, by converting into a specific color area the specific color prescribed as reference and its neighboring area, based on the image characteristic amount.

A sixth aspect of the present invention provides 6 the color adjustment device as defined in the fifth aspect, wherein the color compensation unit calculates a similarity degree coefficient indicative of the degree of similarity between the input color and the specific color, using the weighting coefficients representing the specific color area determined by the specific-color-area determination unit, and compensates the input color existing in the specific color area, using the similarity degree coefficient and predetermined adjustment amount.

A seventh aspect of the present invention provides the color adjustment device as defined in the sixth aspect, wherein the predetermined adjustment amount is given by adjustment amount along a luminance axis, adjustment amount along a chrominance axis, and adjustment amount along a hue axis, and wherein the color compensation unit compensates the input color existing in the specific color area, with respect to luminance, chrominance, and hue, using the similarity degree coefficient.

According to the above structures, in consideration of the specific-color-likeness of the input color of the input image, the color adjustment of the input image can be performed in a natural form.

An eighth aspect of the present invention provides the color adjustment device as defined in the first aspect, wherein the color compensation unit compensates the input color based on visual environment information indicative of visual environment where the output image of the color compensation unit is displayed.

According to the above structure, the state of a visual environment in which the output image is displayed (the level of brightness, for example) can be taken in as visual environment information, and the input color can be compensated based on the information.

A ninth aspect of the present invention provides the color adjustment device as defined in the first aspect, wherein the image characteristic amount is determined based on amount of statistics of the input color of the color image.

A tenth aspect of the present invention provides the color adjustment device as defined in the first aspect, wherein the image characteristic amount is at least one of average luminance and color temperature of the color image.

According to the above structures, even for the input image of which the brightness and the color temperature have been changed due to photography conditions, lighting conditions, etc., a proper image characteristic amount can be extracted by performing statistics processing for the input color. Consequently, the color adjustment with a high-quality image can be practiced to any color images.

An eleventh aspect of the present invention provides the color adjustment device as defined in the first aspect, wherein the image characteristic amount is changed according to additional information including photography information and editing information of the color image.

A twelfth aspect of the present invention provides the color adjustment device as defined in the first aspect, wherein the image characteristic amount is changed according to source information indicative of kinds of the color image, such as broadcasting, DVD, and a still-image.

According to the above structures, a proper image characteristic amount can be extracted with reference to the given additional information or source information. Consequently, the color adjustment with a high-quality image can be practiced to any color images, with comparative simplicity.

A thirteenth aspect of the present invention provides the color adjustment device as defined in the fifth aspect, wherein the weighting coefficient possesses property with a maximal value at the specific color and decreasing values as deviating from the maximal value in the color space.

A fourteenth aspect of the present invention provides the color adjustment device as defined in the fifth aspect, wherein the weighting coefficient is defined by the weighting coefficient along a luminance axis, the weighting coefficient along a chrominance axis, and the weighting coefficient along a hue axis.

According to the above structures, the rational weighting coefficient which centers on the specific color can be used.

A fifteenth aspect of the present invention provides the color adjustment device as defined in the first aspect, further comprising: a compensation amount selecting means with which a user can select the degree of compensation of the input color.

A sixteenth aspect of the present invention provides the color adjustment device as defined in the first aspect, wherein the compensation amount selecting unit changes the degree of spread of the specific color area determined by the specific-color-area determination unit.

A seventeenth aspect of the present invention provides the color adjustment device as defined in the first aspect, wherein the compensation amount selecting unit changes the degree of compensation of the input color, the compensation being calculated by the color compensation unit.

According to the above structures, since the level of color adjustment can be set according to liking of a user, a user's high degree of satisfaction is obtained to the image after color adjustment.

An eighteenth aspect of the present invention provides the color adjustment device as defined in the first aspect, further comprising: a region specification unit with which a user can select one of a plurality of specified regions which are set in advance, thereby the user can adjust the specific color in relation to the specified region.

According to the above structure, when a user specifies the area where the color adjustment device of the present invention is used, it becomes possible to specify the memory color corresponding to the user's racial traits and regional characteristics as a specific color. Consequently, the higher degree of satisfaction is obtained from the users of various parts of the world to the image after color adjustment.

Brief Description of the Drawings

Fig. 1 is a block diagram illustrating a color adjustment device in Embodiment 1 of the present invention;

Fig. 2 illustrates the color space (y, c, h) and the specific color area used in Embodiment 1 of the present invention;
Fig. 3 (a) is an illustrative diagram of the weighting coefficient kh for hue of Embodiment 1 of the present invention;
Fig. 3 (b) is an illustrative diagram of the weighting coefficient kc for chrominance of Embodiment 1 of the present invention;
Fig. 3 (c) is an illustrative diagram of the weighting coefficient kh for luminance of Embodiment 1 of the present invention;
Fig. 4 illustrates the relationship between the image characteristic amount Q and the center P1, minimum P2, and maximum P3 of the weighting coefficient kh in Embodiment 1 of the present invention;
Fig. 5 is a block diagram illustrating a specifc-color-area determination unit in Embodiment 1 of the present invention;
Fig. 6 is a block diagram illustrating a color adjustment device in Embodiment 2 of the present invention;
Fig. 7 illustrates a color space distributable range AQ in Embodiment 2 of the present invention;
Fig. 8 illustrates another color space distributable range AQ in Embodiment 2 of the present invention;
Fig. 9 is a block diagram illustrating a color adjustment device in Embodiment 3 of the present invention;
Fig. 10 illustrates a color space distributable range BQ in Embodiment 3 of the present invention;
Fig. 11 illustrates another color space distributable range BQ in Embodiment 3 of the present invention;
Fig. 12 is a block diagram illustrating a color adjustment device in Embodiment 4 of the present invention;
Fig. 13 illustrates correspondence between the source information and the weighting coefficient $\alpha$ in Embodiment 4 of the present invention;
Fig. 14 illustrates the relationship between the adjustment amount chosen by the user and adjustment-weighting-coefficients $\beta$ and $\gamma$ in Embodiment 4 of the present invention;
Fig. 15 is a block diagram illustrating a color adjustment device in Embodiment 5 of the present invention;
Fig. 16 illustrates the relationship between the region specification and the specific color in Embodiment 5 of the present invention;
Fig. 17 is a block diagram illustrating a color adjustment device in Embodiment 6 of the present invention;
Fig. 18 is an illustrative diagram of the color patch for color adjustment device tests in Embodiment 7 of the present invention; and
Fig. 19 is a block diagram illustrating the conventional color compensation device.

Best Mode for Carrying out the Invention

Embodiments of the present invention are explained in the following, with reference to the accompanying drawings.

(Embodiment 1)

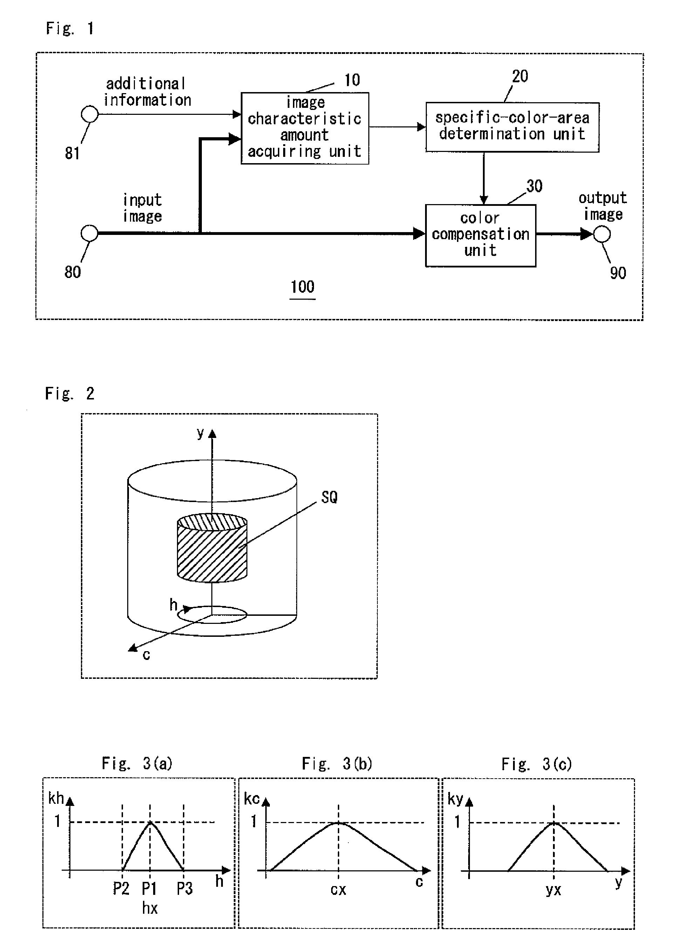

Fig. 1 is a block diagram illustrating a color adjustment device 100 in Embodiment 1 of the present invention. The color adjustment device 100 of the present embodiment comprises an image characteristic amount acquiring unit 10, a specific-color-area determination unit 20, and a color compensation unit 30.
An input image is inputted into an image data input terminal 80, and additional information expressing the work situations (a lighting condition, a photography condition, a copy condition, a record/reproduction condition, etc.) of the input image is inputted into an additional information input terminal 81.
The image characteristic amount acquiring unit 10 computes the average luminance, color temperature, etc. of the input image as image characteristic amount from the input image itself. Alternatively, the image characteristic amount acquiring unit 10 acquires the average luminance, color temperature, etc. of the input image from the additional information as the image characteristic amount.
The specific-color-area determination unit 20 determines a specific color area, based on the image characteristic amount which the image characteristic amount acquiring unit 10 outputted.
The color compensation unit 30 computes the degree of similarity of the input color of the input image to the specific color, with reference to the specific color area which the specific-color-area determination unit 20 outputted. Next, based on the computed degree of similarity, the color compensation unit 30 performs the color adjustment about the specific color for the input color of the input image, and outputs the result to an image data output terminal 90 as the output image.
Thus, the color adjustment device 100 of the present embodiment performs the color adjustment about at least one specif color to the input color of a color picture.
In the following explanation, it is assumed that, in the color adjustment device 100 of the present embodiment, the data of the input image shall be given in terms of the value (y, c, h) which is the polar coordinate representation of the YCbCr signal, that is the luminance signal and the color-difference signal. That is, the color space (y, c, h) is defined by three components of luminance y, chrominance c, and hue h, as shown in Fig. 2. Fig. 2 illustrates the color space (y, c, h) and the specific color area used in Embodiment 1 of the present invention.

Moreover, the "specific color" described in the present invention expresses a certain point (a representative value) on the color space (y, c, h), and the "specific color area" indicates a spread of area which centers on the representative value of the specific color on the color space (y, c, h). For example, the area SQ shown in Fig. 2 corresponds to the "specific color area".

The "image characteristic amount" is a factor which affects the color distribution of the input image. Generally, the color distribution of a picture differs from the actual color distribution of photographic subject, depending on the photography conditions (the kind of input device, brightness of lighting, etc.), the transmission conditions, or the record/ reproduction conditions.

For example, although the brightness of interior lighting is hundreds of luces, the outdoor brightness amounts to as high as tens of thousands of luces, and the brightness of the object under lighting can be thousands to tens of thousands times the brightness of interior lighting. Therefore, the brightness level of a picture is usually normalized to the input dynamic range by the input device. Moreover, the color distribution of an input image changes sharply depending on the color temperature of lighting, and is compensated by the input device in many cases. That is, the level of the normalization to the brightness of the input image and the level of the compensation to the color temperature of the input image vary with the conditions under which the input image is produced.

Therefore, in the present invention, the value which affects the difference between the color distribution of a photographic subject and the color distribution of an input image, i.e., the characteristic in the color space of the color picture, is acquired as the image characteristic amount, and the specific color which is set as the object of color adjustment is determined based on the acquired image characteristic amount. Although the image characteristic amount can take various kinds of amount, the image characteristic amount is calculated from the average luminance of the input image in the present embodiment.

The image characteristic amount acquiring unit 10 of the present embodiment calculates the image characteristic amount Q of an input image from the luminance y of the input image. The image characteristic amount Q is calculated by operation of Equation 1 as an average luminance which is the amount of statistics in every frame of the input image. Here, the constant "n" is the number of pixels which constitutes one frame, and the variable "yi" stands for the luminance y of the i-th pixel.

[Equation 1]

$$Q = \frac{1}{n} \sum_{i=1}^{n} y_i$$

The specific-color-area determination unit 20 shown in Fig. 1 defines the spread of area which centers on a specific color in the color space as a specific color area which has the similarity to the specific color, based on the image characteristic amount Q. That is, the specific color area is expressed using a weighting coefficient k which indicates the specific-color-likeness. Fig. 3 (a) is an illustrative diagram of the weighting coefficient kh about the hue of Embodiment 1 of the present invention; Fig. 3 (b) is an illustrative diagram of the weighting coefficient kc about the chrominance; and Fig. 3 (c) is an illustrative diagram of the weighting coefficient ky about the luminance. Fig. 3 (a), (b), and (c) show the distribution on each main axis of the color space (y, c, h) shown in Fig. 2.

In the present embodiment, the weighting coefficient kh for the hue has an important meaning, when adjusting color. In the present embodiment, the skin color is assumed to be a specific color (yx, cx, hx), in the hue axis, the weighting coefficient kh is equal to the maximum "1" at the center P1 (h=hx) corresponding to the skin color, and in the hue axis, the weighting coefficient kh is equal to the minimum value "0" at the minimum P2 and the maximum P3 which are distant from the center P1.

That is, the specific-color-area determination unit 20 determines the weighting coefficient ky as maximum "1", when the hue is in agreement with the hue hx of the specific color (yx, cx, hx), and determines the weighting coefficient kh as a gradually-decreasing value, as the hue deviates from the specific color to the minimum P2 side or to the maximum P3 side.

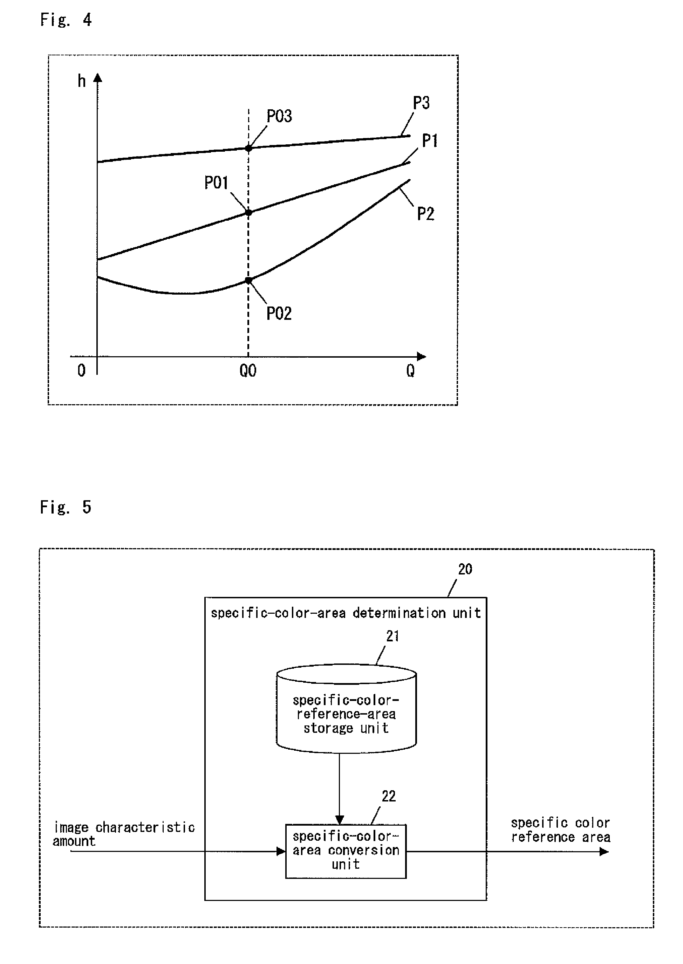

Fig. 4 illustrates the relationship between the image characteristic amount Q and the center P1, minimum P2, and maximum P3 of the weighting coefficient kh. The center P1, minimum P2, and maximum P3 of the weighting coefficient kh are given as a function of the image characteristic amount Q, as shown in Fig. 4. That is, the center P1, minimum P2, and maximum P3 of the weighting coefficient kh are determined corresponding to the image characteristic amount Q; consequently the specific color area is determined uniquely. It is clearly seen from Fig. 4 that the specific color area moves to the area of a higher hue with increasing average luminance of the input image which has the image characteristic amount Q.

Similarly, as for chrominance c and luminance y, the specific-color-area determination unit 20 shown in Fig. 1 defines the weighting coefficient kc for chrominance, and the weighting coefficient ky for luminance, as shown in Figs. 3 (b) and 3 (c), respectively.

As mentioned above, the specific-color-area determination unit 20 determines the output weighting factor k to be used for the color correction of the input color by the following Equation 2, after determining the weighting coefficients ky, kc, and kh.

[Equation 2]

$$k = k_y \times k_c \times k_h$$

where, the symbol "x" is a multiplication operator.

In this way, the specific color area is determined using the weighting coefficient ky along the luminance axis, the weighting coefficient kc along the chrominance axis, and the weighting coefficient kh along the hue axis. The coefficients are the function of the image characteristic amount Q.

In addition, the specific-color-area determination unit 20 does not necessarily need to use a function like Equation 2 as the output weighting factor k which determines the specific color area. Alternatively, it is sufficient from the practical viewpoint if the specific-color-area determination unit 20 can define, as the output-weighting-factor k, a coefficient which decreases as the distance from the specific color in the color space increases.

As another alternative, it is also preferable to adopt a look-up table for weighting coefficients, as follows; the coordinate values of the specific color area used as reference, such as skin color, blue sky color, and green color, and the corresponding weighting coefficients are stored in the look-up table in advance, and by giving a coordinate value in consideration of the image characteristic amount Q, the corresponding weighting coefficient is acquired. According to this method, the area of free form in a 3-dimensional color space can be preferably made as a specific color area.

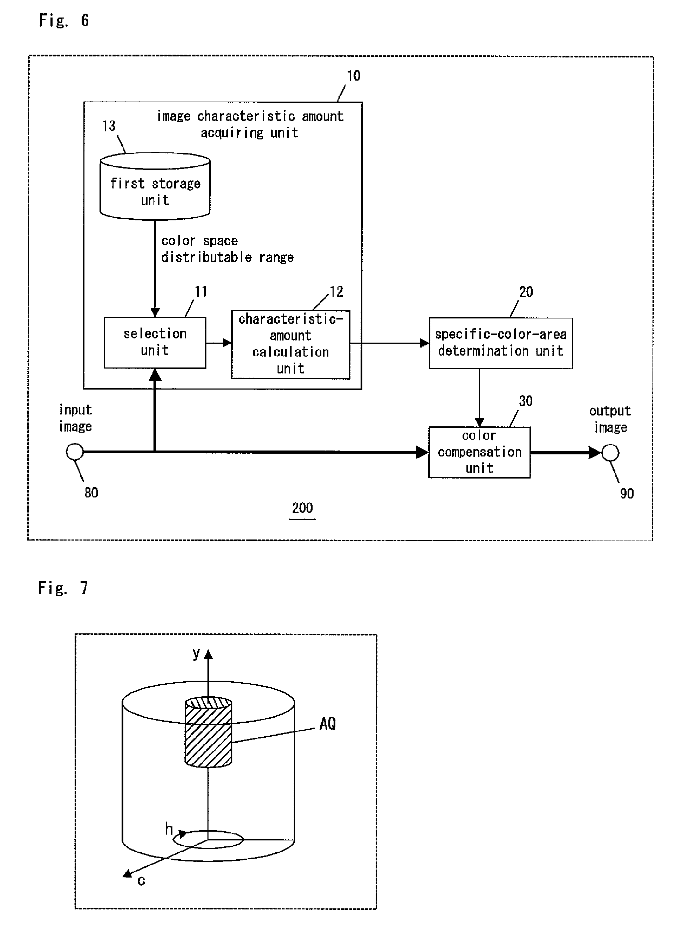

Fig. 5 is a block diagram illustrating a specific-color-area determination unit 20 in Embodiment 1 of the present invention. As shown in Fig. 5, the specific-color-area determination unit 20 possesses a specific-color-reference-area storage unit 21 and a specific-color-area conversion unit 22. The specific-color-reference-area storage unit 21 and the specific-color-area conversion unit 22 can share the contents of processing performed by the specific-color-area determination unit 20.

In this case, as shown in Fig. 4, the specific-color-reference-area storage unit 21 stores the values of the reference center P01, reference minimum P02, and reference maximum P03 of a weighting coefficient kh, in the position where the image characteristic amount Q is equal to the reference image characteristic amount Q0 which is a reference, as the specific color reference area about color. Similarly, the specific-color-reference-area storage unit 21 stores the reference values about chrominance c and luminance y, as the specific color reference area about chrominance and the specific color reference area about luminance, respectively.

Moreover, the specific-color-area conversion unit 22 takes partial charges of the other functions which the specific-color-area determination unit 20 mentioned above performs, referring to the specific color reference area stored in the specific-color-reference-area storage unit 21.

Next, the color compensation unit 30 shown in Fig. 1 computes firstly the degree of similarity between the input color of an input image and the specific color, with reference to the specific color area. Namely, the coefficient of specific color similarity, indicating the degree of similarity to a specific color, possesses the property of which the value is maximum when the input color is equal to the specific color, the value decreases according to the weighting coefficient which defines the specific color area, as the input color departs from the specific color in the color space, and the value becomes zero when the input color is outside the specific color area. In other words, when the input color is in the specific color area, the coefficient of specific color similarity is proportional to the output weighting factor k (Equation 2) which is given by the weighting coefficient kh for the hue, the weighting coefficient kc for chrominance, and the weighting coefficient kh for hue, and the coefficient of specific color similarity is zero outside the specific color area. Here, the three weighting coefficients define the specific color area.

The color compensation unit 30 compensates the input color with respect to the specific color, using the output weighting factor k mentioned above in place of the coefficient of specific color similarity. (In this case, the coefficient of specific color similarity and the output weighting factor k are assumed to be in a one-on-one proportionality relationship.) That is, the color compensation unit 30 sets up the adjustment amount to the specific color as specific color adjustment amount $\delta(\delta y, \delta c, \delta h)$, and calculates the output color (y', c', h') compensated for the input color (y, c, h), according to the following three equations, Equations 3-5.

[Equation 3]

$$y' = y + k \times \delta_y$$

[Equation 4]

$$c' = c + k \times \delta_c$$

[Equation 5]

$$h' = h + k \times \delta_h$$

Although the coefficient of specific color similarity (which is equal to the output weighting factor k in the present embodiment) and the specific color adjustment amount δ can be obtained by the calculation mentioned above, the use of a look-up table can accelerate the processing much more, with a preferable result. When the look-up table is used, the calculations of Equations 3-5 are replaced by the calculations of Equations 6-8, respectively.

[Equation 6]

$$y' = y + kLUT(y, c, h) \times \delta_y LUT(y, c, h)$$

[Equation 7]

$$c' = c + kLUT(y, c, h) \times \delta_c LUT(y, c, h)$$

[Equation 8]

$$h' = h + kLUT(y, c, h) \times \delta_h LUT(y, c, h)$$

In Equations 6-8, kLUT(y, c, h) expresses that a coefficient of specific color similarity kLUT can be found from the look-up table with the input color (y, c, h) as arguments. δyLUT(y, c, h) expresses that the luminance component δyLUT of the specific color adjustment amount δ can be found from the look-up table with the input color (y, c, h) as arguments. δcLUT(y, c, h) expresses that the chrominance component δcLUT of the specific color adjustment amount δ can be found from the look-up table with the input color (y, c, h) as arguments. δhLUT(y, c, h) expresses that the hue component δhLUT of the specific color adjustment amount δcan be found from the look-up table with the input color (y, c, h) as arguments.
The color adjustment device 100 of Embodiment 1 explained above possesses the following effect.
(Effect 1) Even when the input image has change in lighting condition (bright lighting or dark lighting?) or change in photography condition (daytime scene or night scene?), etc., the color adjustment device 100 of the present embodiment can adjust the input image to a desired color easily.
(Effect 2) The color adjustment device 100 of the present embodiment does not take for the area of the specific color the area which is comparatively wide in the input image and possesses the same color system as the specific color.
(Effect 3) Since the color adjustment device 100 of the present embodiment determines the specific color area automatically according to the input image, the color adjustment device 100 can adjust moving pictures in real time.

(Effect 4) In the color adjustment device 100 of the present embodiment, it is not necessary to perform a white balance calibration, a gain control, etc. of the input image beforehand, in order to compulsorily control the change in lighting condition, etc. Therefore, specific colors, such as the memory color, can be adjusted to a desired color, keeping the intention of the lighting condition etc. of the image manufacturer.

In addition, in the color adjustment device 100 of the present embodiment, although the average of luminance was used as the image characteristic amount, other statistical information about luminance, such as a maximum value, a mode value, and a variance, may be used instead of the average.

Moreover, in the color adjustment device 100 of the present embodiment, although the amount of statistics about luminance was used as the image characteristic amount, other amount of statistics may be used, if they are color information convertible from the input color, such as chrominance, hue, color temperature, and RGB values. For example, if color temperature is used, the adjustment of the specific color according to the color temperature of scenes, such as evening glow, becomes attainable. Moreover, two or more kinds of the amount of statistics, such as luminance and color temperature, may be used as the image characteristic amount.

In the color adjustment device 100 of the present embodiment, although the image characteristic amount is updated for each frame of picture, the updating may be performed once to several frames. Alternatively, the image characteristic amount may be updated using a recursive filter etc. so that the image characteristic amount may follow gently to the change of frame. By making the image characteristic amount follow gently, a rapid change in the adjustment amount is suppressed and flickering of the moving pictures due to the adjustment can be suppressed.

Moreover, in the color adjustment device 100 of the present embodiment, when several frames are read in advance to acquire the image characteristic amount, and only one frame among them is found to show a different image characteristic amount from others, it is possible to avoid changing the specific color area to the frame. Consequently, a rapid change of the adjustment amount is suppressed and flickering of the moving picture due to adjustment can be controlled.

Furthermore, in the color adjustment device 100 of the present embodiment, the specific color area may be updated using a recursive filter etc., instead of updating the image characteristic amount using the recursive filter etc., Even by such processing, a rapid change of the adjustment amount is suppressed and flickering of the moving picture due to the adjustment can be controlled.

In the color adjustment device 100 of the present embodiment, the color compensation unit 30 may possess a buffer for at least one frame. By delaying color correction by one frame using the frame buffer, it becomes possible to bring the frame used for determining the specific color area at a certain time in agreement with the frame on which the color correction is performed.

Although the specific color area of the present embodiment was only skin color, the specific color area may be a plurality of areas which include blue sky color, green color, etc. as well as skin color.

The image characteristic amount of the present embodiment was calculated from the statistical information of the input image; however, if additional information, such as photography information and editing information of the input image, is available, the additional information may be used as the image characteristic amount.

In addition, although the color adjustment device 100 of the present embodiment used the YCbCr color space as the color space, other color spaces, such as RGB, CMYK, CIE-LAB, and HSV, may be used for the color space. For example, when CIE-LAB color space is used, the distance in the color space is proportional to the degree of the difference in color which human feels; therefore, it becomes easy to determine the specific color area. When a color space expressed with the three attributes of luminance, chrominance, and hue, such as YCbCr and HSV color spaces, is used, the adjustment amount is intuitive for a user; therefore, it is easy to determine the adjustment amount.

(Embodiment 2)

Fig. 6 is a block diagram illustrating a color adjustment device 200 in Embodiment 2 of the present invention. In Fig. 6, the same components as those in Fig. 1 are attached with the same reference symbols or numerals and the descriptions thereof are omitted.

The color adjustment device 200 of the present embodiment comprises an image characteristic amount acquiring unit 10, a specific-color-area determination unit 20, and a color compensation unit 30. An image characteristic amount acquiring unit 10 includes a selection unit 11, a characteristic-amount calculation unit 12, and a first storage unit 13.

The following explains the detail of the image characteristic amount acquiring unit 10 of the color adjustment device 200 of the present embodiment.

The first storage unit 13 stores, as a color space distributable range, the range over which the color component to be used as the calculation object of the image characteristic amount may be distributed in color space (y, c, h). Fig. 7 illustrates a color space distributable range AQ in Embodiment 2 of the present invention; The color space distributable range AQ shown in Fig. 7 is set as the area of color space with high luminance and low chrominance.

Referring to the color space distributable range AQ stored in the first storage unit 13, a selection unit 11 judges whether or not the input color of the input image which is inputted from the image data input terminal 80 is found in the color space distributable range AQ. When the input color is judged to be found in the color space distributable range AQ, the selection unit 11 chooses the input color, thereby outputting the input color to the characteristic-amount calculation unit 12 as a color component of the calculation object of the image characteristic amount.

Using the luminance component of the input color which is outputted from the selection unit 11, the characteristic-amount calculation unit 12 calculates the image characteristic amount Q according to the following equation.

[Equation 9]

$$Q = \frac{1}{m} \sum_{i=1}^{m} y_i$$

Here, the variable "yi" is the luminance of the i-th pixel possessing the input color which is outputted from the selection unit 11, and the constant "m" is the total number of the pixels possessing the input color which is outputted from the selection unit 11.

In the color adjustment device 200 of the present embodiment, as mentioned above, the image characteristic amount acquiring unit 10 judges whether the input color of the input image is found in the color space distributable range AQ. If found, the image characteristic amount acquiring unit 10 calculates the image characteristic amount Q using the input color in the color space distributable range AQ. The specific-color-area determination unit 20 determines a specific color area using the image characteristic amount Q calculated as above. The color compensation unit 30 computes the coefficient of specific color similarity indicating the degree of similarity between the input color of the input image and the specific color, with reference to the specific color area determined by the specific-color-area determination unit 20, and compensates the input color with respect to the specific color. The operation of the specific-color-area determination unit 20 and the color compensation unit 30 is the same as that described in Embodiment 1 of the present invention, and the detailed explanation thereof is omitted.

In the color adjustment device 200 of the present embodiment, it is assumed that the color which affects the color distribution of the input image has low chrominance and high luminance; hence, the color space distributable range AQ is set as the area of color space with high luminance and low chrominance, as shown in Fig. 7. Therefore, the calculation of the image characteristic amount Q uses the statistical information obtained by only the input color existing inside the color space distributable range AQ (the average value calculated by Equation 9); consequently, the calculation accuracy of the image characteristic amount Q is improved, leading to a good color adjustment. For example, in a case where an image of a big blackish photographic subject occupies a large portion of the screen, the color adjustment device 200 of the present embodiment can calculate the image characteristic amount Q only from the image of bright portions other than the large portion occupied by the image of the big blackish photographic subject. Therefore, the calculation accuracy of the image characteristic amount Q improves.

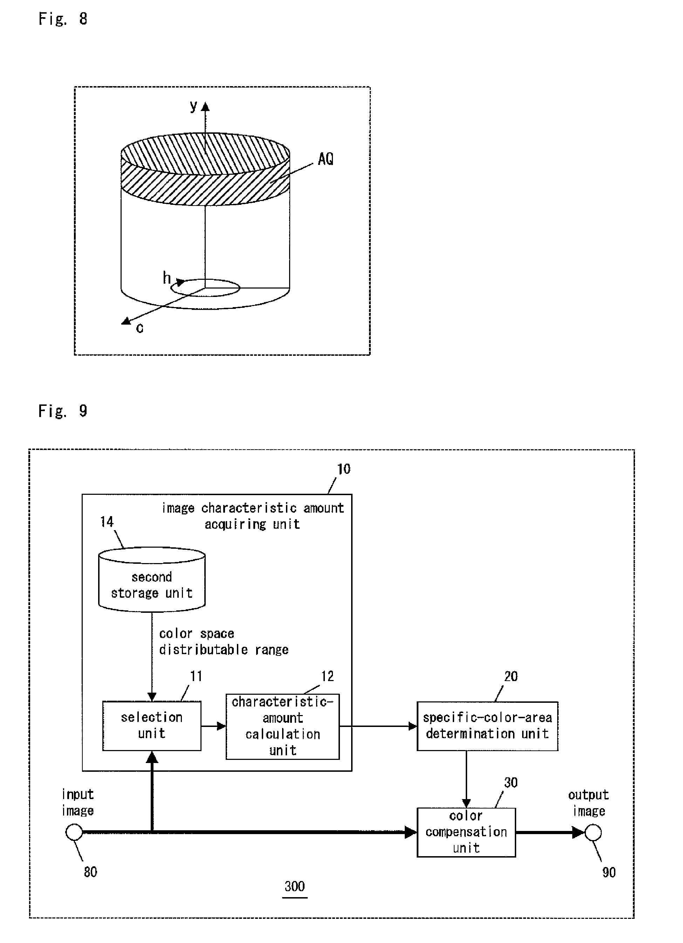

Although the color adjustment device 200 of the present embodiment assumes that the color which affects the color distribution of the input image possesses low chrominance and high luminance, the color space distributable range AQ is not limited to the present case, but may be based on other assumption which increases the accuracy of the image characteristic amount Q. For example, as shown in Fig. 8, the color space distributable range AQ can also be set as the color space of high brightness regardless of chrominance and hue. By setting this way, the image characteristic amount acquiring unit 10 can perform the judgment of whether the input color of the input image is in the color space distributable range AQ using the luminance component only, thereby rendering the processing easier.

(Embodiment 3)

Fig. 9 is a block diagram illustrating a color adjustment device 300 in Embodiment 3 of the present invention. In Fig. 9, the same components as those in Fig. 1 are attached with the same reference symbols or numerals and the descriptions thereof are omitted.

The color adjustment device 300 of the present embodiment comprises an image characteristic amount acquiring unit 10, a specific-color-area determination unit 20, and a color compensation unit 30, and the image characteristic amount acquiring unit 10 includes a selection unit 11, a characteristic-amount calculation unit 12, and a second storage unit 14.

The following explains the detail of the image characteristic amount acquiring unit 10 of the color adjustment device 300 of the present embodiment.

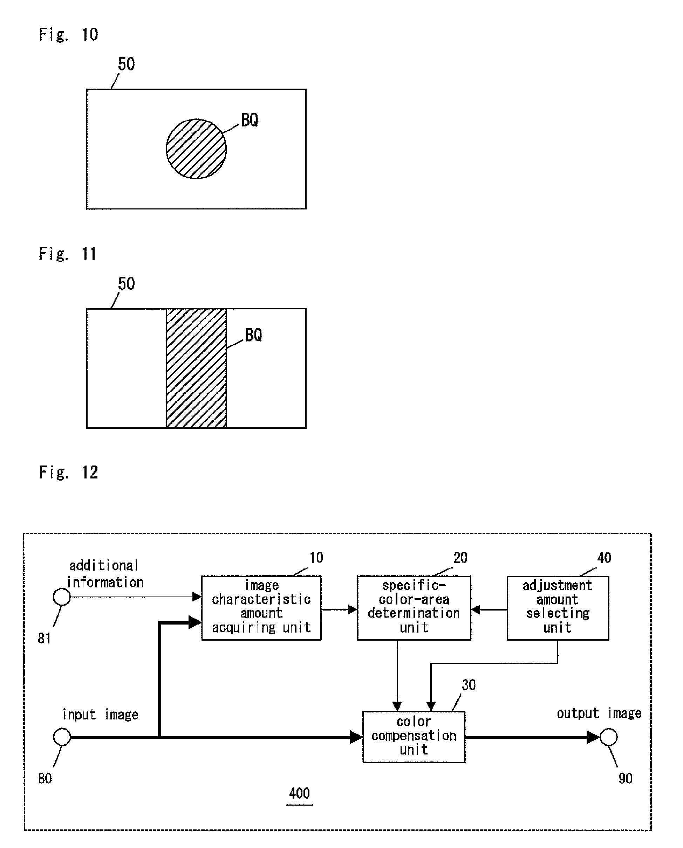

The second storage unit 14 stores, as an image distributable range, the range over which the pixel to be used as the calculation object of the image characteristic amount may be distributed on a screen. Fig. 10 illustrates a color space distributable range BQ in Embodiment 3 of the present invention. In the example shown in Fig. 10, the image distributable range BQ is set as the circular area of the central part of the screen 50. This area is an area in which an image of a person's face is comparatively frequently located in images of a videophone, etc.

Referring to the image distributable range BQ stored in the second storage unit 14, the selection unit 11 judges whether the pixel of the input image which is inputted from the image data input terminal 80 is in the image distributable range BQ. When the pixel of the input image is judged to be in the image distributable range BQ, the selection unit 11 chooses the input color of the pixel, and outputs it to the characteristic-amount calculation unit 12.

Using the luminance component of the input color which is outputted from the selection unit 11, the characteristic-amount calculation unit 12 calculates the image characteristic amount Q according to the following equation.

[Equation 10]

$$Q = \frac{1}{s} \sum_{i=1}^{s} y_i$$

Here, the variable "yi" is the luminance of the i-th pixel possessing the input color which is outputted from the selection unit 11, and the constant "m" is the total number of pixels possessing the input color which is outputted from the selection unit 11, i.e., the number of pixels in the image distributable range BQ.

In the color adjustment device 300 of the present embodiment, it is assumed that the color which affects the color distribution of the input image concentrates near the center of the screen 50. Therefore, the calculation of the image characteristic amount Q uses the statistical information obtained by only the pixels existing inside the image distributable range BQ (the average value calculated by Equation 10); consequently, the calculation accuracy of the image characteristic amount Q is improved, leading to a good color adjustment.

Although the color adjustment device 300 of the present embodiment assumes that the color which affects the color distribution of the input image is concentrated in the circular portion near the center of the screen 50, the image distributable range is not limited to the present case, but may be based on other assumption which increases the accuracy of the image characteristic amount. For example, as shown in Fig. 11, the area of a rectangle in the central part of the screen 50 can also be set as the image distributable range BQ. By setting this way, a pixel included in the image distributable range BQ can be, easily and conveniently, recognized only by the number of the pixel.

(Embodiment 4)

Fig. 12 is a block diagram illustrating a color adjustment device 400 in Embodiment 4 of the present invention. In Fig. 12, the same components as those in Fig. 1 are attached with the same reference symbols or numerals and the descriptions thereof are omitted.

The color adjustment device 400 of the present embodiment comprises an image characteristic amount acquiring unit 10, a specific-color-area determination unit 20, a color compensation unit 30, and an adjustment amount selecting unit 40.

The source information which indicates the kind of input image (the kind such as broadcasting, DVD, still picture) is inputted into the additional information input terminal 81 of the color adjustment device 400 of the present embodiment as additional information. The color adjustment device 400 of the present embodiment calculates the image characteristic amount Q using this source information. The example is explained in the following.

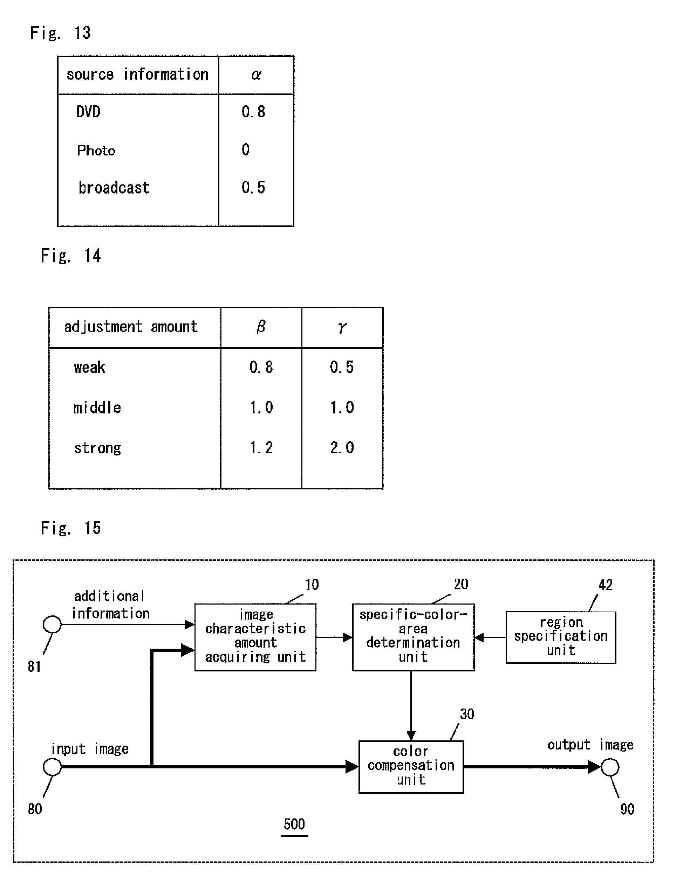

The source information indicates the kind of input image. According to the kind of input image, a weighting coefficient $\alpha$ for calculating the image characteristic amount Q is assigned. Fig. 13 illustrates the correspondence between the source information and the weighting coefficient $\alpha$. If the source of the input image is DVD, then $\alpha = 1$, if Photo (photograph), then $\alpha = 0$, and if broadcasting, then $\alpha = 0.5$.

First, based on the input image and using the same method as Embodiment 1 of the present invention, the image characteristic amount acquiring unit 10 determines the average luminance of the input color of the input image, and calculates the image characteristic amount Q. Next, the image characteristic amount acquiring unit 10 calculates modified-image-characteristic-amount Q' by the following equation, using the calculated image characteristic amount Q and the average image characteristic amount Qave, and the weighting coefficient $\alpha$ calculated from the source information.

## [Equation 11]

$$Q' = Q + \alpha\,(Qave - Q)$$

Here, the average image characteristic amount Qave is the average image characteristic amount experientially calculated from many input images.

In this way, the color adjustment device 400 of the present embodiment sets the modified-image-characteristic-amount Q' equal to the image characteristic amount Q of an input image, if the source of an input image is still pictures (namely, photo), such pictures as shot by a digital camera; and the color adjustment device 400 sets the modified-image-characteristic-amount Q' to a value nearly equal to the average image characteristic amount Qave, if the source of an input image is DVD. That is, the color adjustment device 400 of the present embodiment suppresses the change amount of the specific color area by limiting the change width of modified-image-characteristic-amount Q' according to the source of the input image.

Next, the operation of the adjustment amount selecting unit 40 is explained. In the color adjustment device 400 of the present embodiment, a user can choose the strength of color adjustment using the adjustment amount selecting unit 40.

Fig. 14 illustrates the relation ship between the adjustment amount which the user chose and adjustment weighting factors $\beta$ and $\gamma$. Corresponding to "weak", "middle", and "strong" as the adjustment amount about the color which the user chooses, the adjustment weighting factors $\beta$ and $\gamma$ are assigned as shown in Fig. 14.

The adjustment weighting factor $\beta$ is sent from the adjustment amount selecting unit 40 to the specific-color-area determination unit 20, and the adjustment weighting factor $\gamma$ is sent from the adjustment amount selecting unit 40 to the color compensation unit 30.

The specific-color-area determination unit 20 corrects the center P1, minimum P2, and maximum P3 of the weighting coefficient hk by which the specific color area is defined, by using the adjustment weighting factor $\beta$ sent from the adjustment amount selecting unit 40. That is, the specific-color-area determination unit 20 interprets the image characteristic amount Q illustrated in Fig. 4 of Embodiment 1 of the present invention as the modified image characteristic amount Q' calculated by the image characteristic amount acquiring unit 10 of the present embodiment, based on the source information. The specific-color-area determination unit 20 subsequently determines the center P1, minimum P2, and maximum P3 of the weighting coefficient hk, as a function of the modified image characteristic amount Q'. Furthermore, using the values determined for the center P1, minimum P2, and maximum P3 of the weighting coefficient hk, the specific-color-area determination unit 20 calculates, by Equation 12 and Equation 13, a new modification-minimum P2' and a new modification-maximum P3', which reflect the adjustment amount chosen by the user.

## [Equation 12]

$$P_2' = P_1 - \beta \times (P_1 - P_2)$$

## [Equation 13]

$$P_3' = P_1 + \beta \times (P_3 - P_1)$$

In the color adjustment device 400 of the present embodiment, if the user chooses "weak" as the adjustment amount, the specific color area will be narrowed, and if the user chooses "strong", the specific color area will be widened.

The color compensation unit 30 calculates new modified specific color offset $\delta'(\delta y', \delta c', \delta h')$ by Equation 14 - Equation 16, using the adjustment weighting factor $\gamma$ sent from the adjustment amount selecting unit 40 and the specific color compensation amount $\delta(\delta y, \delta c, \delta h)$ described in Embodiment 1 of the present invention. Equation 14 relates to the luminance component of the modified specific color offset, Equation 15 relates to the chrominance component of the modified specific color offset, and Equation 16 relates to the hue component of the modified specific color offset.

[Equation 14]

$$\delta_y{}' = \gamma \times \delta_y$$

[Equation 15]

$$\delta_c{}' = \gamma \times \delta_c$$

[Equation 16]

$$\delta_h{}' = \gamma \times \delta_h$$

In the color adjustment device 400 of the present embodiment, if the user chooses "weak" as the adjustment amount, the specific color compensation amount will decrease, and if the user chooses "strong", the specific color compensation amount will increase.

Furthermore, the color compensation unit 30 calculates a modified output weighting factor k' as the coefficient of specific color similarity, which is the degree of similarity to the specific color of the input color of the input image, by referring to the modified specific color area which reflects the user's selection result described above. Using the modified specific color offset δ'(δy', δc', δh') reflecting the user's selection result and the modified output weighting factor k', the color compensation unit 30 compensates the input color (y, c, h) with respect to the specif color, by Equation 17 - Equation 19, and subsequently outputs an output image possessing the output color (y', c', h') after compensation to the image data output terminal 90.

[Equation 17]

$$y' = y + k' \times \delta_y{}'$$

[Equation 18]

$$c' = c + k' \times \delta_c{}'$$

[Equation 19]

$$h' = h + k' \times \delta_h{}'$$

As explained above, the color adjustment device 400 of the present embodiment acquires the source information as the additional information of the input image, and limits the change width of the image characteristic amount Q according to the kind of source of the input image, thereby suppressing the change amount of the specific color area. Consequently, in the color adjustment device 400, the calculation accuracy of the specific color area is improved, leading to a good color adjustment.

Furthermore, in the color adjustment device 400 of the present embodiment, by correcting not only the specific color compensation amount but the specific color area by the user's selection, the compensation to the input color near the boundary of the specific color area is optimized, and a better color adjustment can be performed.

(Embodiment 5)

Fig. 15 is a block diagram illustrating a color adjustment device 500 in Embodiment 5 of the present invention. In Fig. 15, the same components as those in Fig. 1 are attached with the same reference symbols or numerals and the descriptions thereof are omitted.

The color adjustment device 500 of the present embodiment comprises an image characteristic amount acquiring unit 10, a specific-color-area determination unit 20, a color compensation unit 30, and a region specification unit 42.

As described above, in the present invention, the "specific color" refers to the color for which color adjustment is performed individually, like the memory color. It is known that the memory color as represented by the skin color changes with a race, regions, etc.

The color adjustment device 500 of the present embodiment can specify the memory color favored in the region as a specific color, by specifying the region where the present device is used.

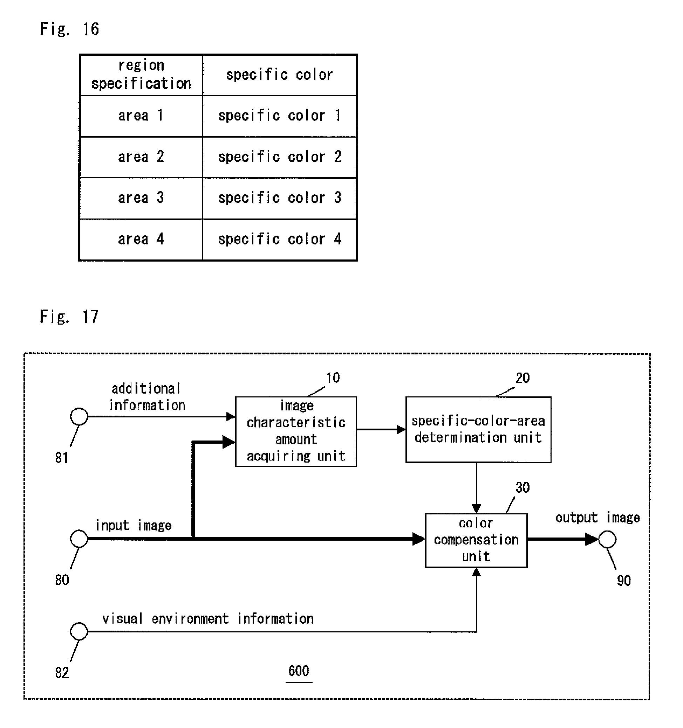

With reference to Fig. 15 and Fig. 16, the operation of the color adjustment device 500 of the present embodiment is outlined.

A user chooses the region where the user lives using a region specification unit 42. As illustrated in Fig. 16, the region specification unit 42 relates regions and the specific colors favored in the respective regions in advance. That is, if the user specifies "area 1", "specific color 1" will be chosen automatically, and "specific color 1" will be sent from the region specification unit 42 to the specific-color-area determination unit 20. The specific-color-area determination unit 20 determines the specific color area based on the sent "specific color 1."

Subsequent operation about the compensation of the input color of the input image is the same as that of Embodiment 1 of the present invention; therefore, the explanation thereof is omitted.

If the color adjustment device 500 of the present embodiment is mounted in a television set, the television set can assign easily the specific color which is favored by a user in any region in the world. That is, the user specifies the region where this television set is used, out of the regions assigned in advance, through the region specification unit 42 of the present embodiment. After that, this television set will display an image after performing color correction always favored by the user, to various kinds of input images.

In this way, according to the color adjustment device 500 of the present embodiment, it becomes possible to specify the memory color corresponding to a user's racial traits and regionality as a specific color. Consequently, the higher degree of satisfaction of the user of various parts of the world is obtained to the image after color adjustment.

(Embodiment 6)

Fig. 17 is a block diagram illustrating a color adjustment device 500 in Embodiment 6 of the present invention. In Fig. 17, the same components as those in Fig. 1 are attached with the same reference symbols or numerals and the descriptions thereof are omitted.

The color adjustment device 600 of the present embodiment further comprises a visual-environment-information input terminal 82, compared with the color adjustment device 100 explained by Embodiment 1 of the present invention.

The information about the environment where the output image of the color adjustment device 600 of the present embodiment is displayed and viewed is inputted into the visual-environment-information input terminal 82 as the visual environment information. Specifically, the visual environment information includes brightness of lighting, color temperature of lighting, etc. in the environment where the image is viewed.

The color compensation unit 30 calculates a weighting coefficient a(ay, ac, ah) based on the inputted visual environment information.

Then, using the weighting coefficient a(ay, ac, ah) and the specific color compensation amount δ(δy, δc, δh) described in Embodiment 1 of the present invention, The color compensation unit 30 calculates a new modified specific color offset ε(εy, εc, εh) by Equation 20 - Equation 22. Equation 20 relates to the luminance component of the modified specific color offset, Equation 21 relates to the chrominance component of the modified specific color offset, and Equation 22 relates to the hue component of the modified specific color offset.

[Equation 20]

$$\varepsilon_y = a_y \times \delta_y$$

[Equation 21]

$$\varepsilon_c = a_c \times \delta_c$$

[Equation 22]

$$\varepsilon_h = a_h \times \delta_h$$

Furthermore, using the output weighting factor k to be used for the color correction of the input color by Equation 2 as described in Embodiment 1 of the present invention, and the modified specific color offset ε described above, the color compensation unit 30 compensates the input color (y, c, h) with respect to the specific color, by Equation 23 - Equation 25, and outputs the output image possessing the output color (y', c', h') after compensation to the image data output terminal 90.

[Equation 23]

$$y' = y + k \times \varepsilon_y$$

[Equation 24]

$$c' = c + k \times \varepsilon_c$$

[Equation 25]

$$h' = h + k \times \varepsilon_h$$

As described above, even in a case where the outputted image looks different due to the visual environment, for example, even in a case where the image of the same object looks in different colors under electric bulb lighting and fluorescent light lighting, the image outputted by the color adjustment device 600 of the present embodiment will look in a more natural color, by adjusting the input color of the input image using the visual environment information.
In addition, in adjustment of the input color by the visual environment information, it is also possible to distinguish the color to be adjusted, and the color not to be adjusted. For example, the skin color may be adjusted according to the visual environment information, but a green color and a blue sky color may be not adjusted.

(Embodiment 7)

In the above-described color adjustment devices of Embodiment 1-6 of the present invention, it will be preferable if a simple test can be performed to check whether the color adjustment is performed normally or not.

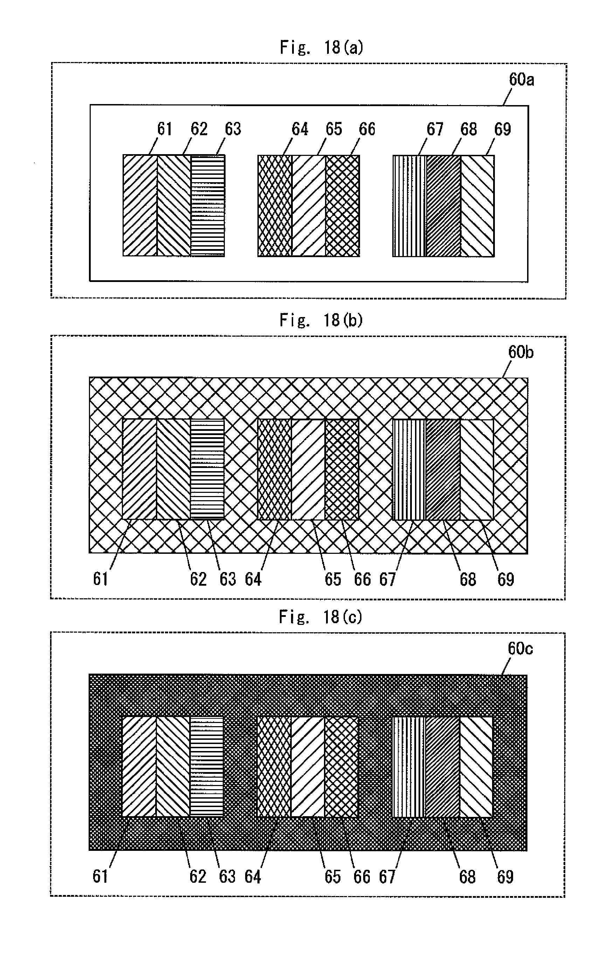

Fig. 18 is an illustrative diagram of the color patch for color adjustment device tests in Embodiment 7 of the present invention.
In Fig. 18, areas 61, 62, and 63 are areas painted in the skin color 1, skin color 2, and skin color 3 with different tone, respectively. Areas 64, 65, and 66 are areas painted in green 1, green 2, and green 3 with different tone, respectively. Areas 67, 68, and 69 are areas painted by blue sky color 1, blue sky color 2, and blue sky color 3 with different tone, respectively.
The color patches 60a, 60b, and 60c illustrated in Fig. 18 possess the foreground of the areas 61-69, and the background painted by colors of different brightness.

In the color adjustment device test of the present embodiment, each of the color patches 60a, 60b, and 60c illustrated in Fig. 18 is sequentially inputted into a color adjustment test device as an input image. It is possible to confirm that the color adjustment is functioning normally, as the result of the test, if the specific color area (namely, the area of which the color correction is performed) changes in order of areas 61, 62, and 63, in accordance with the change of the brightness of the background (namely, the average luminance) in order of color patches 60a, 60b, and 60c.

The use of the color patches for the color adjustment device tests of the present embodiment allows simple confirmation that the color adjustment devices 100-600 of Embodiment 1-6 of the present invention are operating normally.

As explained above, the aim of the present invention is to provide a color adjustment device and a color adjustment method, which can adjust a photographed input image to a desired color easily, even if the conditions of lighting or the photography scene change; various applications are possible unless it deviates from the aim of the present invention.

According to the present invention, even when the conditions of lighting or the photography scene change, it is easy to adjust the photographed input image to the desired color.

Industrial Applicability

The color adjustment device concerning the present invention can be suitably applied to color display devices possessed by a TV apparatus, a portable terminal, a computer display screen, a color printer, etc., and in the applicable fields thereof.

**Claims**

1. A color adjustment device comprising:

   an image-characteristic-amount acquiring unit operable to acquire a value expressing characteristic of an inputted color image, as image characteristic amount;
   a specific-color-area determination unit operable to determine, as a specific color area, an arbitrary area in a color space including a specific color defined in correspondence with the color image, the determination being made based on the image characteristic amount; and
   a color compensation unit operable to compensate an input color which exists in the specific color area, among the input color of the color image.

2. The color adjustment device as defined in claim 1, wherein said image-characteristic-amount acquiring unit comprises:

   a first storage unit operable to store a color-space distributable range indicative of a range of color space in which a color component to be treated in acquiring the image characteristic amount can be distributed;
   a selection unit operable to judge whether or not the input color is included in the color-space distributable range stored in said first storage unit, and operable to select and output the input color when the input color is included in the color-space distributable range; and
   a characteristic-amount calculation unit operable to calculate the image characteristic amount, using the input color outputted by said selection unit.

3. The color adjustment device as defined in claim 1, wherein said image-characteristic-amount acquiring unit comprises:

   a second storage unit operable to store an image distributable range indicative of an area of a screen in which a pixel to be treated in acquiring the image characteristic amount can be distributed;
   a selection unit operable to judge whether or not a pixel for adjustment on the screen is included in the image distributable range stored in said second storage unit, and operable to select and output the input color of the pixel for adjustment when the pixel for adjustment is included in the image distributable range; and
   a characteristic-amount calculation unit operable to calculate the image characteristic amount, using the input color outputted by said selection unit.

4. The color adjustment device as defined in claim 1, wherein said specific-color-area determination unit comprises:

a specific-color-reference-area storage unit operable to store a specific color reference area indicative of an area in color space of a subject image for adjustment as reference; and

a specific-color-area conversion unit operable to convert the specific color reference area stored in said specific-color-reference-area storage unit, into the specific color area, based on the image characteristic amount.

5. The color adjustment device as defined in claim 1, wherein said specific-color-area determination unit determines, based on the image characteristic amount, the specific color area in a spread of color space with a center on the specific color, in terms of weighting coefficients which are used to express an apparent specific color.

6. The color adjustment device as defined in claim 5, wherein said color compensation unit calculates a similarity degree coefficient indicative of the degree of similarity between the input color and the specific color, using the weighting coefficients representing the specific color area determined by said specific-color-area determination unit, and compensates the input color existing in the specific color area, using the similarity degree coefficient and predetermined adjustment amount.

7. The color adjustment device as defined in claim 6, wherein the predetermined adjustment amount is given by adjustment amount along a luminance axis, adjustment amount along a chrominance axis, and adjustment amount along a hue axis, and

wherein said color compensation unit compensates the input color existing in the specific color area, with respect to luminance, chrominance, and hue, using the similarity degree coefficient.

8. The color adjustment device as defined in claim 1, wherein said color compensation unit compensates the input color based on visual environment information indicative of visual environment where the output image of the color compensation unit is displayed.

9. The color adjustment device as defined in claim 1, wherein the image characteristic amount is determined based on amount of statistics of the input color of the color image.

10. The color adjustment device as defined in claim 1, wherein the image characteristic amount is at least one of average luminance and color temperature of the color image.

11. The color adjustment device as defined in claim 1, wherein the image characteristic amount is changed according to additional information including photography information and editing information of the color image.

12. The color adjustment device as defined in claim 1, wherein the image characteristic amount is changed according to source information indicative of kinds of the color image, such as broadcasting, DVD, and a still image.

13. The color adjustment device as defined in claim 5, wherein the weighting coefficient possesses property with a maximal value at the specific color and decreasing values as deviating from the maximal value in the color space.

14. The color adjustment device as defined in claim 5, wherein the weighting coefficient is defined by the weighting coefficient along a luminance axis, the weighting coefficient along a chrominance axis, and the weighting coefficient along a hue axis.

15. The color adjustment device as defined in claim 1, further comprising: a compensation amount selecting means with which a user can select the degree of compensation of the input color.

16. The color adjustment device as defined in claim 15, wherein said compensation amount selecting means changes the degree of spread of the specific color area determined by said specific-color-area determination unit.

17. The color adjustment device as defined in claim 15, wherein said compensation amount selecting means changes the degree of compensation of the input color, the compensation being calculated by said color compensation unit.

18. The color adjustment device as defined in claim 1, further comprising: a region specification unit with which a user can select one of a plurality of specified regions which are set in advance, thereby the user can adjust the specific color in relation to the specified region.

19. A color adjustment method comprising:

acquiring a value expressing characteristic of color image inputted, as image characteristic amount;

determining, as a specific color area, an arbitrary area in a color space including a specific color defined in correspondence with the color image, the determination being made based on the image characteristic amount; and

compensating an input color which exists in the specific color area, among the input color of the color image.

20. The color adjustment method as defined in claim 19, further comprising at least one of:

selecting the degree of compensation of the input color by a user; and

selecting one of a plurality of specified regions which are set in advance, thereby a user can adjust the specific color in relation to the specified region.

Fig. 1

```
additional
information
81

input
image
80

          image
          characteristic     10
          amount
          acquiring unit

          specific-color-area    20
          determination unit

          color              30
          compensation
          unit

                              output
                              image
                              90

          100
```

Fig. 2

Fig. 3(a)        Fig. 3(b)        Fig. 3(c)

Fig. 4

Fig. 5

Fig. 6

Fig. 7

Fig. 8

Fig. 9

Fig. 10

50

BQ

Fig. 11

50

BQ

Fig. 12

additional
information

81

input image

80

```
image
characteristic
amount
acquiring unit        10

specific-
color-area
determination
unit                  20

adjustment
amount
selecting
unit              40

color
compensation
unit              30
```

output image

90

400

Fig. 13

| source information | $\alpha$ |
|---|---|
| DVD | 0.8 |
| Photo | 0 |
| broadcast | 0.5 |

Fig. 14

| adjustment amount | $\beta$ | $\gamma$ |
|---|---|---|
| weak | 0.8 | 0.5 |
| middle | 1.0 | 1.0 |
| strong | 1.2 | 2.0 |

Fig. 15

Fig. 16

| region specification | specific color |
|---|---|
| area 1 | specific color 1 |
| area 2 | specific color 2 |
| area 3 | specific color 3 |
| area 4 | specific color 4 |

Fig. 17

additional information

image characteristic amount acquiring unit  10

specific-color-area determination unit  20

81

input image

color compensation unit  30

output image

80

90

visual environment information

82

600

Fig. 18(a)

60a

61 62 63    64 65 66    67 68 69

Fig. 18(b)

60b

61    62 63 64    65 66 67    68 69

Fig. 18(c)

60c

61    62 63 64    65 66 67    68 69

Fig. 19

<br>

**INTERNATIONAL SEARCH REPORT**

| International application No. |
| --- |
| PCT/JP2005/021808 |

A. CLASSIFICATION OF SUBJECT MATTER
*H04N1/46*(2006.01), *G06T1/00*(2006.01), *H04N1/60*(2006.01)

According to International Patent Classification (IPC) or to both national classification and IPC

B. FIELDS SEARCHED

Minimum documentation searched (classification system followed by classification symbols)
*H04N1/46*(2006.01), *G06T1/00*(2006.01), *H04N1/60*(2006.01)

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2003-162714 A  (Seiko Epson Corp.),<br>06 June, 2003 (06.06.03),<br>Par. Nos. [0009] to [0020]; drawings 1 to 10<br>(Family: none) | 1,2,4,8-10,<br>12,19<br>3,5-7,11,<br>13-18,20 |
| Y<br>A | JP 2004-201106 A  (Sony Corp.),<br>15 July, 2004 (15.07.04),<br>Par. Nos. [0094] to [0103]; drawings 1 to 20<br>(Family: none) | 3,15<br>1,2,4-14,<br>16-20 |
| Y<br>A | JP 02-96477 A  (Matsushita Electric Industrial<br>Co., Ltd.),<br>09 April, 1990 (09.04.90),<br>Page 3, lower left column, line 12 to lower<br>right column, line 11; drawings 1 to 4<br>(Family: none) | 5,6,13,14,<br>16,17<br>1-4,7-12,15,<br>18-20 |

☒ Further documents are listed in the continuation of Box C.     ☐ See patent family annex.

* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>    23 February, 2006 (23.02.06) | Date of mailing of the international search report<br>    07 March, 2006 (07.03.06) |
| --- | --- |
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

| International application No. |
|---|
| PCT/JP2005/021808 |

C (Continuation).  DOCUMENTS CONSIDERED TO BE RELEVANT

| Category* | Citation of document, with indication, where appropriate, of the relevant passages | Relevant to claim No. |
|---|---|---|
| Y<br>A | JP 2004-64792 A  (Samsung Electronics Co.,<br>Ltd.),<br>26 February, 2004 (26.02.04),<br>Par. Nos. [0008] to [0034]; drawings 2 to 6<br>& CN 1479529 A         & US 2004017380 A1<br>& EP 1385331 A2 | 7,18,20<br>1-6,8-17,19 |
| Y<br>A | JP 2003-216941 A  (Sony Corp.),<br>31 July, 2003 (31.07.03),<br>Par. Nos. [0008] to [0138]; drawings 1 to 24<br>(Family: none) | 11<br>1-10,12-20 |
| A | JP 09-163161 A  (Brother Industries, Ltd.),<br>20 June, 1997 (20.06.97),<br>Par. Nos. [0003] to [0046]; drawings 1 to 23<br>& US 006188786 B1 | 1-20 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6078320 A
- JP 10198795 A
- JP 2001092956 A